# EUROPÄISCHE PATENTSCHRIFT

(11) **EP 1 591 641 B1**
(45) Veröffentlichungstag und Bekanntmachung des Hinweises auf die Patenterteilung: **17.07.2013**
(21) Anmeldenummer: 05102650.8
(22) Anmeldetag: 04.04.2005
(51) Int. Cl.: F02B 31/08, F02D 9/10, F02M 35/10, F16C 33/20

(54) **Klappenanordnung im Flanschbereich eines Ansaugsystems einer Brennkraftmaschine**
Flap arrangement for the intake system of an engine
Ensemble de vanne dans le système d'admission d'un moteur

(30) Priorität: 29.04.2004 DE 102004021125
(43) Veröffentlichungstag der Anmeldung: 02.11.2005
(73) Patentinhaber: MANN+HUMMEL GmbH, 71638 Ludwigsburg (DE)
(72) Erfinder: Madeira, Pedro, 74321 Bietigheim-Bissingen (DE)

(56) Entgegenhaltungen:
- DE-A1- 19 936 470
- DE-C1- 4 420 931
- FR-A1- 2 797 931
- JP-A- 10 266 874
- US-A- 4 907 547
- US-A- 5 813 380

## Beschreibung

### Stand der Technik

Die Erfindung betrifft ein Ansaugsystem für eine Brennkraftmaschine nach dem Oberbegriff des Patentanspruches 1.

Ein vergleichbares Ansaugsystem ist beispielsweise aus der DE 195 04 382 bekannt. Diese Erfindung beschreibt eine Klappenanordnung, welche im Ansaugsystem einer Brennkraftmaschine angeordnet ist und Klappenventile aufweist, die auf einer Schaltwelle befestigt sind. Hierbei wird die Klappenanordnung in das Ansaugsystem derart integriert, dass eine Beeinträchtigung der Flanschfunktion bzw. der Befestigungsfunktion verhindert wird. Dies wird dadurch erreicht, dass der flanschseitige Teil des Ansaugsystems eine erste Halbschale zur Lagerung der Klappenanordnung bildet und an einem kommunizierenden Lagerrahmen weitere Halbschalen angeformt sind, die in zusammengebautem Zustand ein Gleitlager bilden.

Die US 4 907 547 A offenbart ein Saugrohr mit einer Schalteinheit, bei der eine runde Welle durch eine Öffnung in eine Lageraufnahme geschoben wird und in einem einseitig geöffneten Lagerbock gehalten wird.

In der DE 44 20 931 C1 wird ein Saugrohr beschrieben mit einer Welle, die einen abgeflachten Bereich aufweist und im Bereich der Abflachung in ein Lagerelement eingesteckt wird und von zwei Lagerseitenwänden jeweils genau 180° umschlossen wird. Die Lagerseitenwände sind durch einen Steg verbunden und weisen Lagerflächen zur Aufnahme der Welle auf, wobei diese Lagerflächen zueinander entgegengesetzte, tangentiale Öffnungen zum Einbringen der Welle aufweisen.

Der US 5 813 380 A ist ein Saugrohr mit einer Klappenwelle zu entnehmen, die in Lageraufnahmen gelagert ist, die aus zwei mit einem Filmscharnier verbundenen Teilen besteht und in eingebautem Zustand die Welle 360° umgibt.

Die Aufgabe der Erfindung besteht darin, die Integration der Lagerelemente dergestalt weiterzuentwickeln, dass eine zuverlässige Funktion bei einfacher Handhabung gewährleistet ist.

Diese Aufgabe wird durch die Merkmale des Patentanspruches 1 gelöst.

Der Grundgedanke der Erfindung liegt darin, zur radialen Lagerung einer Schaltwelle anstatt zwei gegeneinander angeordneter Lagerelemente durch ein Lagerelement zu ersetzen. Dieses umschließt die Schaltwelle über einen Winkelbereich von wesentlich mehr als 180°. Am Lagerelement ist dazu eine schalenförmige Lagerkontur vorhanden, die eine Lagerfläche bildet. Außerhalb der Lagerfläche ist die Lagerkontur tangential geöffnet. Üblicherweise wird die Schaltwelle schalenförmig von der Lagerfläche umschlossen. Es ist jedoch auch generell möglich, auf eine flächige Lagerfläche zu verzichten und die Lagerflächen durch kreisförmig umlaufende Nocken anzuordnen. In diesem Fall bildet sich zwischen der Schaltwelle und der Lagerkontur jeweils eine linienförmige Berührung, die am Scheitelpunkt der Nocken stattfindet. Dadurch werden die Berührflächen zwischen Lagerfläche und Schaltwelle minimiert. Bei dieser Ausgestaltung kann z. B. bewusst eine Leckage zwischen den Kanälen erzeugt und der Wärmeübergang zwischen Schaltwelle und Lagerkontur minimiert werden. Die Lagerkontur des Lagerelementes ist an einer Seitenwand angeordnet, die mit einem Aufnahmeprofil des Flanschbereiches kommuniziert, wobei das Lagerelement von einer Stirnseite in das Aufnahmeprofil des Flanschbereiches eingeschoben werden kann und mit einer Planfläche des Flanschbereiches bündig abschließt. Um eine exakte Positionierung des Lagerelementes im Flanschbereich zu ermöglichen, kann im Aufnahmeprofil ein Absatz angeordnet sein, der in eingebautem Zustand mit einer Anlagefläche des Lagerelementes in Berührung kommt. Das Lagerelement besteht somit aus wenigstens einer Seitenwand, an welcher auf einer Seite eine Lagerkontur angeordnet ist, welche die Schaltwelle klauenförmig umschließt. Auf der, der Lagerkontur gegenüberliegenden Seite, ist eine Planfläche des angeordnet, welche in eingebautem Zustand bündig mit der Planfläche des Flanschteils abschließt. Die Anlagefläche des Lagerelementes sollte bevorzugt zwischen der Planfläche des Lagerelementes und der Lagerkontur angeordnet sein oder durch eine tangentiale Fläche der Lagerkontur gebildet werden. Dabei ist zu beachten, dass die Anlagefläche annähernd parallel zur Planfläche des Lagerelementes ausgerichtet ist und durch die Anlage keine Verbiegung der Lagerkontur stattfinden kann. Die Anlagefläche des Lagerelementes kann auch an der Seitenwand angeformt werden. Dabei ist jedoch zu beachten, dass die Klauenform keiner Biegespannung ausgesetzt wird. Das Passungsverhältnis zwischen Lagerelement und Aufnahmeprofil ist auch mit leichter Verspannung ausführbar, wodurch mögliche Fertigungstolleranzen überbrückt werden können. Die Aufnahmeprofile für die Lagerelemente sind in den zwischen den Einlasskanälen liegenden Zwischenwänden und an den Außenwänden des Flanschteils angeordnet. Zur Verhinderung einer axialen Verschiebung der Lagerelemente muss zwischen Aufnahmeprofil und Lagerelement in axialer Richtung eine formschlüssige Verbindung bestehen. Dies kann dadurch erreicht werden, dass die Seitenwand in einer Nut des Aufnahmeprofiles untergebracht ist, oder dass die Seitenwand eine Nut bildet, in welche ein Steg des Aufnahmeprofiles eingreift. Als Materialwahl bietet sich für mögliche Flanschbereiche Polyamid oder Polypropylen an, wobei die Materialien faserverstärkt verwendet werden können. Der Flanschbereich kann beispielsweise auch aus einem Aludruckguss hergestellt werden. Das Lagerelement wird vorzugsweise aus einem Kunststoff mit guten Gleiteigenschaften gebildet. Zur Montage der Lageranordnung kann das Lagerelement auf der Schaltwelle befestigt werden. Dadurch, dass der Umschließungswinkel des Lagerelementes größer 180° ist, können die Lagerelemente allen Lagerstellen in die Schaltwelle eingeklipst werden und sind somit verliergesichert mit der Schaltwelle verbunden. In einem weiteren Schritt können die auf der Schaltwelle eingeklipsten Lagerelemente in die Aufnahmeprofile des Flanschbereiches eingeschoben werden, wodurch der Flanschbereich in einen vormontierten Einbauzustand gebracht wird. Diese Anordnung ermöglicht einen vorteilhaften Montageprozess, bei dem die Schaltwelle mit den Lagerelementen komplettiert angeliefert werden kann. Die Handhabung der vormontierten Schaltwelle wird dadurch stark vereinfacht. Die Lagerkontur besteht aus einem einstückigen Bauteil, wodurch die Gefahr einer Aufsummierung von Toleranzen im Vergleich zu mehrteiligen Lagerelementen minimiert wird.

Gemäß einer vorteilhaften Anwendung lässt sich die erfindungsgemäße Klappenanordnung dort einsetzen, wo mehrere Einlasskanäle pro Zylinder vorhanden sind. Dies ist insbesondere dort der Fall, wo zwischen Motorblock und Zylinderkopf ein Flanschteil angeordnet ist, in welchem die Klappenventile den jeweils zweiten Einlasskanal verschließen. In diesem Einsatzbereich sorgen die Klappen für eine bessere Verwirbelung der zugeführten Ansaugluft. Die Schaltwelle durchdringt dabei alle Einlasskanäle, wobei nur jeweils am zweiten Einlasskanal eine Klappe auf der Schaltwelle vorhanden ist. Dabei wird es in vorteilhafter Weise ermöglicht, mit einer durchgehenden Schaltwelle die Klappen aller Zylinder zu betätigen.

In einer vorteilhaften Ausgestaltung der Erfindung ist das Lagerelement aus zwei Seitenwänden gebildet, wobei beide Seitenwände durch einen Steg miteinander verbunden sind und das Lagerelement einstückig hergestellt werden kann. Der Steg, welcher die Seitenwände des Lagerelementes verbindet, kann in eingebautem Zustand in Verbindung mit einem Absatz als Anlagefläche dienen. Es bietet sich an, den Steg an den Randbereichen der Seitenwände abzusetzen, wodurch sich in Einschieberichtung des Lagerelementes ein H-förmiger Querschnitt ergibt, wobei dieser Querschnitt den Querschnitt des Aufnahmeprofiles am Flanschbereich vordefiniert. Bei dieser Ausgestaltung wird es vorteilhaft erlaubt, eine breitere Auflage für das Lagerelement zu schaffen und dadurch das Lagerelement auch an größeren Zwischenwänden anzuordnen, wobei durch die breitere Auflage eine stabilere Lagerung des Lagerelementes im Flanschbereich erreicht wird. Da die Seitenwände des Lagerelementes unmittelbar im Wandungsbereich der Einlasskanäle anliegen, werden die Biegemomente der Schaltwelle idealerweise am Randbereich der Zwischenwände aufgenommen.

In einer weiteren vorteilhaften Ausgestaltung der Erfindung werden im Zusammenhang mit dem vorherigen Anspruch die tangentialen Öffnungen der beiden Seitenwände entgegengesetzt ausgerichtet. Die Umschließung der Schaltwelle durch das Lagerelement teilt sich somit auf zwei Lagerflächen auf, wobei bei einer Mindestumschließung von wesentlich mehr als 180° jede einzelne Lagerfläche mehr als 90° Umschließungswinkel aufweist. Der maximale Umschließungswinkel der Schaltwelle kann auf bis über 360° ausgedehnt werden. Dies wird dadurch ermöglicht, dass die einzelnen Lagerkonturen jeweils einen Umschließungswinkel von mehr als 180° aufweisen, wobei jede einzelne Lagerkontur für sich in die Schaltwelle eingeschwenkt wird. Das Lagerelement wird in diesem Beispiel durch eine gabelähnliche Kontur gebildet, wobei die beiden Lagerkonturen gegeneinander gewandte Klauen darstellen. Zur Montage des Lagerelementes wird dieses mit den Seitenwänden parallel zur Achse der Schaltwelle in die Schaltwelle eingeschoben und das Lagerelement in Richtung der tangentialen Öffnungen in die Schaltwelle eingedreht. Eine rastende Verbindung zwischen Schaltwelle und Lagerelement findet dann statt, wenn die einzelnen Lagerflächen einen Umschließungswinkel von > 180° aufweisen. Vorteilhaft bei dieser Gestaltungsvariante ist, dass sich die Ausrichtung der Lagerflächen auf jede mögliche Belastungsrichtung der Schaltwelle anpassen lässt. Die Hauptbelastungsrichtung des Lagers wird infolge der Strömungskräfte gleich der Strömungsrichtung des Luftstromes sein. Aufgrund der Motorpulsation sowie aufgrund möglicher Drallströmungen müssen vom Lagerelement jedoch Kräfte in vollem, radialem Umfang aufgenommen werden. Durch die beschriebene Gestaltung ist es möglich, mit einem einzigen einstückigen Lagerelement radial in vollem Umfang Kräfte aufzunehmen, wodurch die Gefahr eines Flatterns der Schaltwelle im Lagerelement nahezu ausgeschlossen wird.

In einer Weiterbildung der Erfindung wird vorgeschlagen, einen Seitenwandabstand, welcher sich zwischen den beiden Seitenwänden erstreckt, an den Durchmesser der Schaltwelle anzupassen. Dabei kann der Abstand zwischen den Seitenwänden bis auf 70% des Durchmessers der Schaltwelle reduziert werden. In diesem Fall werden die Seitenwände bei der Montage im elastischen Bereich gespreizt. Dadurch lassen sich die Lagerflächen zwischen den Kanalwandungen sehr breit gestalten und werden nur durch den Seitenwandabstand unterbrochen, welcher die Einführung in die Schaltwelle gewährleistet.

Eine weitere vorteilhafte Gestaltungsvariante der Erfindung ermöglicht sich in der Integration einer Dichtnut in das Lagerelement. Um die einzelnen Strömungskanäle gegeneinander und gegenüber der Außenseite abzudichten, sind die einzelnen Kanäle in der Regel von einer Dichtnut umschlossen, welche zur Aufnahme eines Dichtmittels, wie beispielsweise einer Elastomerdichtung, vorgesehen ist. Da die Lagerelemente zwangsläufig in den Zwischenwänden angeordnet sind, wird dieser geschlossene Nutverlauf vom Lagerelement unterbrochen. Um die Nut in gleichem Querschnitt fortführen zu können, wird die Planfläche des Lagerelementes dergestalt ausgebildet, dass die Nutflanken sowie der Nutgrund in gerader Linie zur Dichtnut des Flanschbereiches fortgeführt werden. Die Seitenflächen der Dichtnut bewirken im Wesentlichen eine Stützfunktion für die Elastomerdichtung. Die eigentliche Dichtung findet an der Berührfläche zur Planseite hin statt. Die zulässige Toleranz im Bereich des Nutgrundes muss deshalb wesentlich enger gefasst werden, als die Toleranz der Nutbreite gegenüber. Diese Gestaltung ermöglicht es, in vorteilhafter Weise die einzelnen Einlasskanäle - trotz einer durch die Lagerelemente bedingten Unterbrechung der Zwischenwände - eine dichtende Verbindung gegenüber der Außenseite zu ermöglichen.

Eine vorteilhafte Weitergestaltung der Erfindung ermöglicht sich durch die Anordnung von Dichtmitteln an den Rändern der Seitenwände des Lagerelementes. Dazu können die Flächen der Seitenwände, welche mit dem Lagersitz im Flanschbereich kommunizieren, mit einer Elastomerbeschichtung versehen werden, wobei bei der Verwendung einer Elastomerdichtung berücksichtigt werden muss, dass die Fixierung des Lagerelementes über die Anlagefläche und einen Absatz des Lagersitzes gebildet wird. Eine weitere Möglichkeit der Abdichtung ergibt sich durch das Einkleben des Lagerelementes, wobei auch hier die kommunizierenden Flächen zwischen Lagerelement und Aufnahmesitz in einer klebenden Verbindung befestigt sind. Diese dichte Verbindung verringert in vorteilhafter Weise die Leckage zwischen den Kanälen und stabilisiert dazu die gesamte Befestigung des Lagerelementes, wodurch die Gefahr eines Lösens aufgrund der Vibrationen und der thermischen Spannungen erschwert wird.

Eine weitere vorteilhafte Ausgestaltung der Erfindung ermöglicht sich in der Gestaltung der kommunizierenden Verbindungsflächen zwischen den Einlasskanälen. Da die Schaltwelle von den einzelnen Lagerflächen in jedem Fall nur in einem Teilbereich umschlossen wird, ist es nicht möglich, die Leckage zwischen den Kanälen vollkommen auszuschließen. Zwischen den Einlasskanälen wird sich durch die tangentialen Öffnungen immer ein Restströmungsquerschnitt ergeben. Diese Leckage kann jedoch gezielt minimiert werden, wenn die Strömungsquerschnitte zwischen den Einlasskanälen einen labyrinthartigen Verlauf nehmen. Dies wird z. B. dadurch erreicht, dass die Seitenwände möglichst dünnwandig gestaltet sind, dass der Umschließungswinkel der Lagerkontur möglichst groß gestaltet wird, dass die Seitenwände möglichst nah am Steg des Lagersitzes verlaufen und dass der Lagersitz des Flanschbereiches möglichst spielfrei an die Schaltwelle angrenzt. Vorteilhaft wird durch diese Maßnahme ein labyrinthartiger Strömungsquerschnitt erzeugt, welcher möglichst dünn gestaltet ist und den Strömungswiderstand zwischen den Einlasskanälen durch mehrere Umlenkungen erschwert.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand eines Ausführungsbeispieles beschrieben. Hierbei zeigen
- Figur 1: den Ausschnitt eines Flanschbereiches in Explosionsdarstellung, wobei die für die Funktion notwendigen Bauteile separat dargestellt sind,
- Figur 2: ein einzelnes Lagerelement für die Lagerung der Schaltwelle,
- Figur 3: den Ausschnitt eines Flanschbereiches, in welchem das Lagerelement und die Schaltklappe montiert angeordnet sind.

### Beschreibung der Ausführungsbeispiele

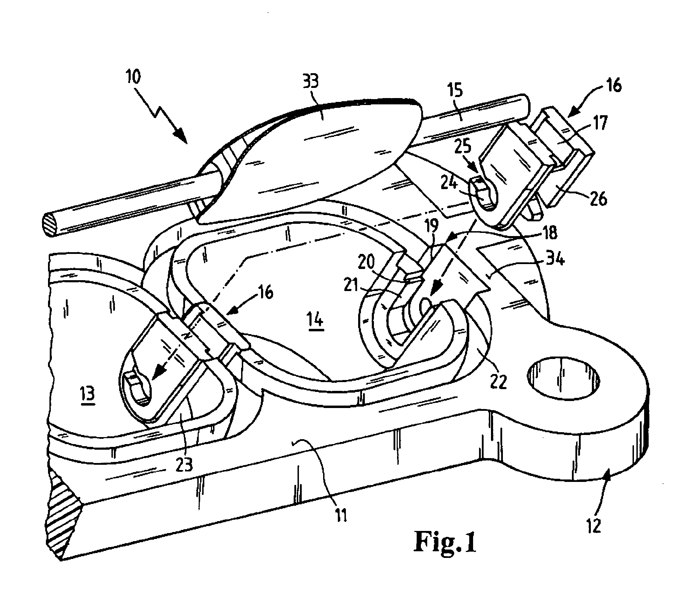

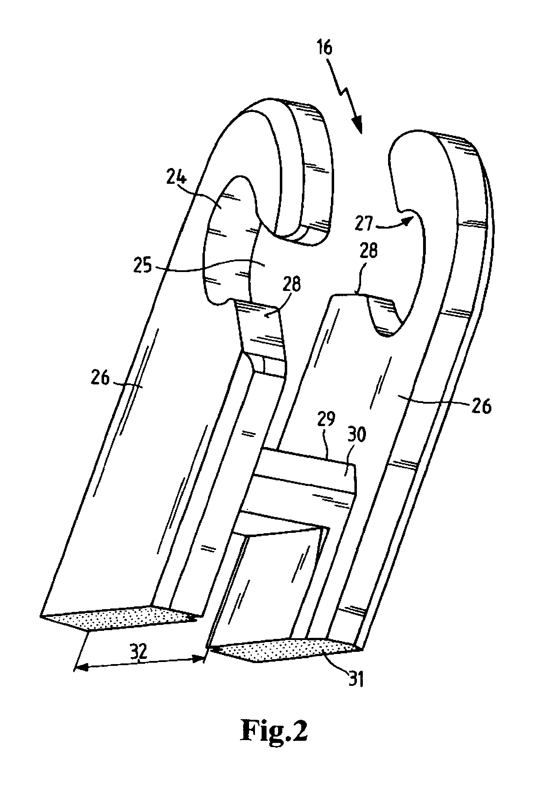

In Figur 1 ist der Ausschnitt eines Flanschbereiches 12 in einem Ansaugsystem 10 mit den notwendigen Elementen zur Befestigung der Klappenlagerung als Explosionsdarstellung gezeigt. Hierbei ist eine Klappe 33 fest mit einer Schaltwelle 15 verbunden, wobei die Klappe 33 für den Einbauraum eines ersten Einlasskanals 14 vorgesehen ist. Ein zweiter Einlasskanal 13 ist zwar von der Schaltwelle 15 durchdrungen, wird jedoch von keiner Klappe gesteuert. Der zweite Einlasskanal 13 wird vom ersten Einlasskanal 14 durch eine Zwischenwand 23 getrennt, wobei in der gezeigten Zwischenwand 23 ein Lagerelement 16 eingebracht ist. Das eingebrachte Lagerelement 16 ist in dem gezeigten Beispiel ohne Schaltwelle eingebracht. Es ist jedoch erkennbar, dass eine Planfläche 11 des Flanschbereiches 12 und eine Dichtnut 22 im Wesentlichen bündig mit dem eingebrachten Lagerelement 16 abschließen. Der Flanschbereich 12 kommuniziert in komplettiertem Zustand mit einer nicht dargestellten Flanschfläche, z. B. eines Saugrohres oder eines Zylinderkopfes. In eingebautem Zustand ist in der Dichtnut 22 eine nicht dargestellte Elastomerdichtung angeordnet, welche die einzelnen Einlasskanäle 13, 14 umschließt und auch im Bereich der Lagerelemente 16 eine dichte Verbindung zur Außenseite hin herstellt. An den Zwischenwänden 23 und an der Außenwand 34 sind jeweils identische Aufnahmeprofile 18 eingeformt, wodurch die Lagerelemente 16 einheitlich ausgeführt werden können und beliebig austauschbar sind. Die Schaltwelle 15 wird in den Lagerelementen 16 radial gelagert und durchdringt auf einer Seite der Außenwand 34 den Flanschbereich 12, wobei auf dieser Seite eine nicht dargestellte Antriebseinheit zur rotatorischen Betätigung der Schaltwelle 15 angeordnet ist. Zur Montage wird das Lagerelement 16 mit den Seitenwänden 26 über die Schaltwelle 15 geführt und anschließend in Richtung der tangentialen Öffnungen 25 in die Lagerkonturen 27 eingeschwenkt. Sind alle Lagerelemente 16 in der Schaltwelle 15 positioniert, so können die Lagerelemente 16 mit der Schaltwelle 15 in das Aufnahmeprofil 18 des Flanschbereiches eingeschoben werden. Die Außenkonturen des Lagerelementes 16 kommunizieren dabei mit dem Aufnahmeprofil 18 des Flanschbereiches 12. Das Aufnahmeprofil 18 bildet am seinen Flanken den Lagersitz 19, wodurch verhindert wird, dass sich das Lagerelement 16 im Aufnahmeprofil 18 verwinden kann. Eine in Figur 2 sichtbare Anlagefläche 29 des Lagerelementes 16 liegt dabei am Absatz des Lagersitzes 20 an. In eingeschobenem Zustand des Lagerelementes 16 bildet die Ausnehmung 17 einen integrierten Querschnittsverlauf der Dichtnut 22. Ein Steg des Lagersitzes 21 füllt in montiertem Zustand einen Bereich zwischen den Seitenwänden 26 im Lagerelement 16 aus und bildet somit einen zusätzlichen Formschluss gegen eine Verwindung des Lagerelementes 16 im Aufnahmeprofil 18. Die Breite des Steges 21 ist dabei auf den Durchmesser der Schaltwelle 15 abgestimmt, wodurch sich der Strömungsquerschnitt zwischen den Einlasskanälen idealerweise minimieren lässt.

In Figur 2 ist ein Lagerelement 16 in perspektivischer Darstellung gezeigt der Figur 1 entsprechende Bauteile sind mit denselben Bezugszeichen versehen. Das Lagerelement 16 ist im Wesentlichen durch zwei Seitenwände 26 und einen Steg 30, welcher die beiden Seitenwände 26 verbindet, gebildet. Eine Planfläche 31 des Lagerelementes 16 schließt in eingebautem Zustand mit der Planfläche 11 (Figur 1) ab. Der Seitenwandabstand 32 entspricht dabei der Nutbreite der in Figur 1 gezeigten Dichtnut 22. Der Steg 30 des Lagerelementes 16 verbindet die beiden Seitenwände 26 und liegt in eingebautem Zustand mit der Anlagefläche 29 auf einem in Figur 1 gezeigten Absatz des Lagersitzes 20 auf. Auf der Seite der Lagerkontur 27 sind an beiden Seitenwänden 26 jeweils ringförmige Lagerflächen 24 angeordnet, wobei diese Lagerkonturen 27 tangentiale Öffnungen 25 aufweisen und diese tangentialen Öffnungen 25 entgegengesetzt zur gegenüberliegenden Seitenwand 26 geöffnet sind.

In dem gezeigten Ausführungsbeispiel umschließen die Lagerflächen 24 einen Winkelbereich von wesentlich über 180° und ermöglichen somit unter Berücksichtigung ihrer radialen Elastizität ein Einklipsen in eine in Figur 1 gezeigte Schaltwelle 15. Die tangentialen Flächen 28 sind im gezeigten Ausführungsbeispiel angeschrägt zur Einschubrichtung angeordnet. Diese schräge Gestaltung soll eine Einführerleichterung zum Einschwenken in eine Schaltwelle ermöglichen. Die tangentiale Fläche 28 kann jedoch ebenso senkrecht zur Einschubrichtung angeordnet sein und dadurch eine Anlagefläche bilden, welche beispielsweise mit einem Lagersitz in einem Aufnahmeprofil in Berührung kommt.

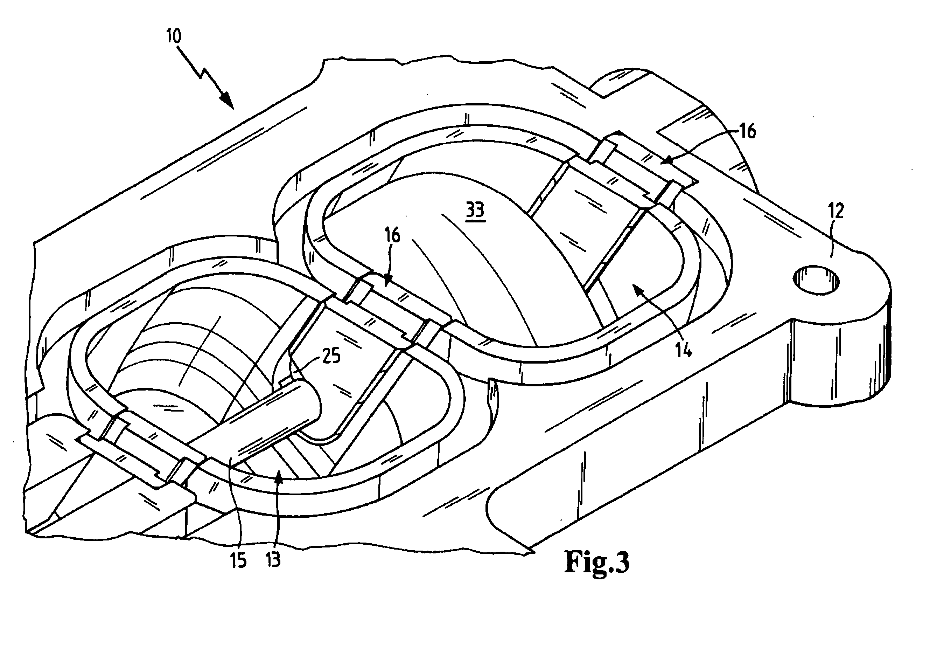

In Figur 3 ist der Flanschbereich 12 des ausschnittweise gezeigten Ansaugsystems 10 gezeigt. Bauteile, die den vorhergehenden Figuren entsprechen, sind mit denselben Bezugszeichen versehen. Schaltwelle 15, Klappe 33 und Lagerelement 16 sind im Flanschteil 12 montiert und die Klappe 33 ist in einen geschlossenen Zustand gedreht. Zwischen erstem Einlasskanal 14 und zweitem Einlasskanal 13 ist das Lagerelement 16 angeordnet, wobei zwischen den beiden Einlasskanälen ein labyrinthartiger Leckagespalt verbleibt, welcher seinen Weg durch die tangentialen Öffnungen 25 findet. Durch diese mehrfache Umlenkung des Leckagestromes erhöht sich der Strömungswiderstand auf ein minimiertes zulässiges Maß.

## Patentansprüche

1. Ansaugsystem für eine Brennkraftmaschine, angeordnet in einem Flanschbereich (12), mit wenigstens einem Einlasskanal (13), einer Klappenanordnung zum Verschließen des Einlasskanals (13), wobei auf einer Schaltwelle (15) Klappen (33) angeordnet sind, die den Einlasskanal (13) durch Betätigung der Schaltwelle (15) verschließen, wobei die Schaltwelle (15) im Flanschbereich (12) des Ansaugsystems (10) integriert ist und im Flanschbereich (12) Lagerelemente (16) zur Lagerung der Schaltwelle (15) vorhanden sind, wobei jedes Lagerelement (16) aus zwei Seitenwänden (26) besteht, wobei die Seitenwände (26) durch einen Steg (30) verbunden sind und die Seitenwände (26) Lagerflächen (24) zur Aufnahme einer Schaltwelle (15) aufweisen, wobei diese Lagerflächen (24) tangentiale Öffnungen (25) zum Einbringen der Schaltwelle (15) aufweisen, wobei die tangentialen Öffnungen (25) der Seitenwände (26) zueinander entgegengesetzt angeordnet sind, **dadurch gekennzeichnet, dass** die Schaltwelle (15) von den einzelnen Lagerelementen (16) über einen Winkelbereich von wesentlich über 180° umschlossen ist.

2. Ansaugsystem nach Patentanspruch 1, **dadurch gekennzeichnet, dass** im Flanschbereich (12) mehrere Einlasskanäle angeordnet sind, wobei für jeden Zylinder ein zweiter Einlasskanal (14) angeordnet ist, wobei die Schaltwelle (15) durch alle Einlasskanäle durchgehend angeordnet ist und wobei die Klappe (33) nur jeweils im ersten Einlasskanal (13) angeordnet ist.

3. Ansaugsystem nach einem der vorhergehenden Patentansprüche 1 bis 2, **dadurch gekennzeichnet, dass** ein Seitenwandabstand (32) zwischen den beiden Seitenwänden (26) an den Durchmesser der Schaltwelle (15) angepasst ist.

4. Ansaugsystem nach einem der vorhergehenden Patentansprüche, **dadurch gekennzeichnet, dass** die Lagerelemente (16) integral an eine umlaufende Dichtnut der einzelnen Kanäle (13, 14) angepasst sind.

5. Ansaugsystem nach einem der vorhergehenden Patentansprüche, **dadurch gekennzeichnet, dass** die Lagerelemente (16) an ihrer Außenkontur Dichtmittel aufweisen, welche eine Leckage zwischen den Kanälen (13, 14) an den Rändern der Seitenwände minimiert.

6. Ansaugsystem nach einem der vorhergehenden Patentansprüche, **dadurch gekennzeichnet, dass** durch eine größtmögliche Umschließung der Lagerkontur (27) um die Schaltwelle (15) zwischen den Kanälen (13, 14) ein Labyrinth gebildet ist.

## Claims

1. Intake manifold system for an internal combustion engine, disposed in a flange section (12), with at least one inlet port (13), one flap arrangement for closing the inlet port (13), flaps (33) being disposed on a switching shaft (15) which close the inlet port (13) by activating the switching shaft (15), the switching shaft (15) being integrated in the flange section (12) of the intake manifold system (10) and support elements (16) for supporting the switching shaft (15) being disposed in the flange section (12), each support element (16) consisting of two sidewalls (26), the sidewalls (26) being connected by a rib (30) and the sidewalls (26) featuring support areas (24) for receiving a switching shaft (15), these support areas (24) featuring tangential openings (25) for inserting the switching shaft (15), the tangential openings (25) of the sidewalls (26) being disposed opposite to each other, **characterized in that** the switching shaft (15) is enclosed by the individual support elements (16) over an angular range significantly higher than 180°.

2. Intake manifold system according to patent claim 1, **characterized in that** several inlet ports are disposed in the flange section (12), a second inlet port (14) being disposed for each cylinder, the switching shaft (15) being disposed continuously through all inlet ports and the flap (33) being disposed only in each of the first inlet port (13).

3. Intake manifold system according to one of the above patent claims 1 to 2, **characterized in that** sidewall distance (32) between the two sidewalls (26) is adapted to the diameter of the switching shaft (15).

4. Intake manifold system according to one of the above patent claims, **characterized in that** the support elements (16) are adapted integrally to a circumferential sealing groove of each individual port (13, 14).

5. Intake manifold system according to one of the above patent claims, **characterized in that** the support elements (16) feature sealants at their outer contour which minimizes a leakage between the ports (13, 14) at the edges of the sidewalls.

6. Intake manifold system according to one of the above patent claims, **characterized in that** due to a greatest possible enclosure of the support contour (27) around the switching shaft (15) a labyrinth is formed between the ports (13, 14).

## Revendications

1. Système d'aspiration pour un moteur à combustion interne, disposé dans une zone de bride (12), avec au moins un canal d'admission (13), un ensemble de clapets servant à fermer le canal d'admission (13), des clapets (33) étant disposés sur un arbre de commande (15) et fermant le canal d'admission (13) par actionnement de l'arbre de commande (15), l'arbre de commande (15) étant intégré dans la zone de bride (12) du système d'aspiration (10) et des éléments d'appui (16) destinés à loger l'arbre de commande (15) se trouvant dans la zone de bride (12), chaque élément d'appui (16) étant constitué de deux parois latérales (26), les parois latérales (26) étant reliées par une nervure (30) et les parois latérales (26) étant dotées de surfaces d'appui (24) destinées à réceptionner un arbre de commande (15), ces surfaces d'appui (24) présentant des ouvertures tangentielles (25) permettant d'introduire l'arbre de commande (15), les ouvertures tangentielles (25) des parois latérales (26) étant situées à l'opposé les unes des autres, **caractérisé en ce que** l'arbre de commande (15) est entouré par les différents éléments d'appui (16) sur un angle essentiellement supérieur à 180°.

2. Système d'aspiration selon la revendication de brevet 1, **caractérisé en ce que** plusieurs canaux d'admission sont disposés dans la zone de bride (12), un deuxième canal d'admission (14) étant disposé pour chaque cylindre, l'arbre de commande (15) traversant tous les canaux d'admission et le clapet (33) étant à chaque fois uniquement disposé dans le premier canal d'admission (13).

3. Système d'aspiration selon l'une des revendications de brevet 1 à 2 précédentes, **caractérisé en ce qu'**un espace (32) entre les deux parois latérales (26) est adapté au diamètre de l'arbre de commande (15).

4. Système d'aspiration selon l'une des revendications de brevet précédentes, **caractérisé en ce que** les éléments d'appui (16) sont intégralement adaptés à une rainure d'étanchéité circulaire des canaux individuels (13, 14).

5. Système d'aspiration selon l'une des revendications de brevet précédentes, **caractérisé en ce que** les éléments d'appui (16) sont pourvus, sur leur contour extérieur, d'un agent d'étanchéité qui minimise les fuites entre les canaux (13, 14) aux bords des parois latérales.

6. Système d'aspiration selon l'une des revendications de brevet précédentes, **caractérisé en ce que**, grâce à un confinement le plus grand possible du contour d'appui (27) autour de l'arbre de commande (15) entre les canaux (13, 14), il se forme un labyrinthe.
